# EUROPEAN PATENT SPECIFICATION

(11) **EP 1 630 641 B1**
(45) Date of publication and mention of the grant of the patent: **03.06.2015**
(21) Application number: 05077253.2
(22) Date of filing: 30.10.2001
(51) Int. Cl.: G06F 21/10, G06T 1/00, H04L 29/06, H04L 29/08

(54) **APPROACH FOR TRACKING DATA**
VERFAHREN UND VORRICHTUNG ZUM VERFOLGEN VON DIGITAL-ÜBERTRAGENEN DATEN
METHODE DE LOCALISATION DE DONNEES

(30) Priority: 31.10.2000 US 703343
(43) Date of publication of application: 01.03.2006
(62) Divisional of application: 01991123.9
(73) Proprietor: Yahoo! Inc., Sunnyvale, CA 94089 (US)
(72) Inventor: Littlefield, Andrew, San Francisco ,California 94107 (US)
(74) Representative: Boult Wade Tennant

(56) References cited:
- WO-A-00/36785
- WO-A-98/14858
- WO-A-98/20672
- US-A- 5 649 013
- "ILLEGAL CONTENTS TRACKING BY AUTOMATIC ID EMBEDDING AT INTERMEDIATESERVER" RESEARCH DISCLOSURE, KENNETH MASON PUBLICATIONS, HAMPSHIRE, GB, no. 427, November 1999 (1999-11), page 1516, XP000893355 ISSN: 0374-4353

## Description

### FIELD OF THE INVENTION

The present invention relates generally to information management, and more specifically, to an approach for tracking the dissemination of data.

### BACKGROUND OF THE INVENTION

The worldwide packet data communication network now commonly referred to as the "Internet" has experienced extraordinary growth and acceptance. The Internet provides access to many different types of information and data including electronic documents, music data files, e.g., MPEG Layer three (MP3) files, and video data files. With access to over several hundred million electronic documents, the Internet is arguably the largest single source of information in the world. As used herein, the term "electronic document" refers to any type of data or information in electronic form. Examples of electronic documents include, without limitation, text documents and web pages.

One problem created by the shear size and accessibility of the Internet is how to track the dissemination of data. Once a copy of data has been made available on the Internet, the copy is freely disseminated to potentially millions of users, with little or no control over to whom the data is disseminated. This problem is particularly acute for music data files, movie data files and image data files where illegal copies are readily made available for download to millions of users. More recently, music, video and image repositories have been created that store and make available for free, large amounts of pirated music, video and image data.

Various attempts have been made to control access to works of authorship to reduce the amount of pirating. One solution has been to encrypt data and provide the means to decrypt the encrypted data to only paying customers. Another solution is to provide works only through subscription Web sites so that only users who pay a subscription fee have access to the works. The primary shortcoming with both of these approaches is that once a clear, i.e., unencrypted, copy of the data has been obtained, the clear copy of the data may be freely distributed to millions of other users over the Internet.

Attempts have also been made to track the dissemination of works of authorship by encoding such works with data that indicates ownership, for example, an author field in a word processing document or a copyright notification contained in an executable file. One type of encoding, referred to as "watermarking," generally involves embedding a particular digital signature, sequence or artifact referred to as a "watermark" in data so that the data (or copies thereof) can be definitively identified. The presence of a sufficiently unique watermark in a copy of data can provide a very high probability that the copy of data originated from a particular source. For example, suppose that a creator of an image wishes to sell copies of the image over the Internet to paying customers. The creator embeds in the image a watermark that identifies the creator. The watermark can be detected by an electronic device, such as a computer, but is not otherwise detectable by visual inspection. Any copy of the image that contains the watermark can then be identified as being created by the creator. Watermarking is well known in the industry and many sophisticated watermarking techniques have been developed. For example, a watermark may be created throughout an entire image so that cropping or reshaping the image does not remove the watermark.

Watermarking is very effective for determining whether particular data originates from a particular source and is therefore very helpful for determining whether copies of data have been illegally obtained. While watermarks can be used to determine whether a located copy of data is illegal, the primary limitation with watermarking is the difficulty of locating the illegal copies. The process of locating illegal copies of data is particularly difficult when the copies can reside anywhere on large communications networks such as the Internet. In the context of the Internet, a "Web Crawler" process is typically used to "crawl" the World Wide Web (the "Web") and locate illegal copies of data.

One problem is that the enormous size of the Web makes crawling the Web computationally expensive and time consuming. Another problem is that data changes very quickly on the Web, requiring repeated searches for illegal copies. Websites that serve as repositories for pirated copies of audio/video works can change their content and domains rapidly, making detection more difficult Yet another problem is that many Websites that serve as repositories for music, video and image data are membership sites that require a user identification and password for access, which prevents Web Crawlers from retrieving Web pages (and the potentially illegal content contained therein) within the password-protected Web sites. Finally, some Web sites employ Web page structures known as "spider traps" that are designed to fool and confuse Web Crawlers.

WO/98/20672 discloses a method and apparatus for embedding identification information into digital content.

Based upon the need to track access to data over communications networks such as the Internet and the limitations in prior approaches, an approach for tracking access to data over a communications network such as the Internet that does not suffer from limitations in prior approaches is highly desirable.

### SUMMARY OF THE INVENTION

According to a first aspect of the invention, there is provided a method according to claim 1.

According to a second aspect of the invention, there is provided a system according to claim 18.

According to a third aspect of the invention, there is provided a computer-readable medium according to claim 21.

### BRIEF DESCRIPTION OF THE DRAWINGS

Embodiments of the invention are illustrated by way of example, and not by way of limitation, in the figures of the accompanying drawings and in which like reference numerals refer to similar elements and in which:
FIG. 1 is block diagram of an arrangement for tracking data according to an embodiment of the invention;
FIG. 2 is a flow diagram of an approach for tracking data according to an embodiment of the invention;
FIG. 3 is a flow diagram of an approach for tracking data using dynamic watermarking according to an embodiment of the invention;
FIG. 4 is a block diagram of an arrangement upon which an approach for tracking data may be implemented in accordance with an embodiment of the invention; and
FIG. 5 is a block diagram of a computer system upon which embodiments of the invention may be implemented.

### DETAILED DESCRIPTION OF THE INVENTION

In the following description, for the purposes of explanation, specific details are set forth in order to provide a thorough understanding of the invention. However, it will be apparent that the invention may be practiced without these specific details. In other instances, well-known structures and devices are depicted in block diagram form in order to avoid unnecessarily obscuring the invention.

Various aspects of the invention are described in more detail hereinafter in the following sections: (1) functional overview; (2) record keeping and reporting; (3) watermarking; and (4) implementation mechanisms.

### 1. FUNCTIONAL OVERVIEW

Tracking data in accordance with an embodiment of the invention generally involves determining whether data, supplied through an intermediary, includes rights data that indicates ownership rights in the data. If the data supplied through the intermediary includes rights data, then a record is generated that indicates that the intermediary supplied data containing rights data. For purposes of explanation, rights data is described herein in the context of a watermark. The invention is not limited to the use of watermarks, however, and is applicable to any type of rights data.

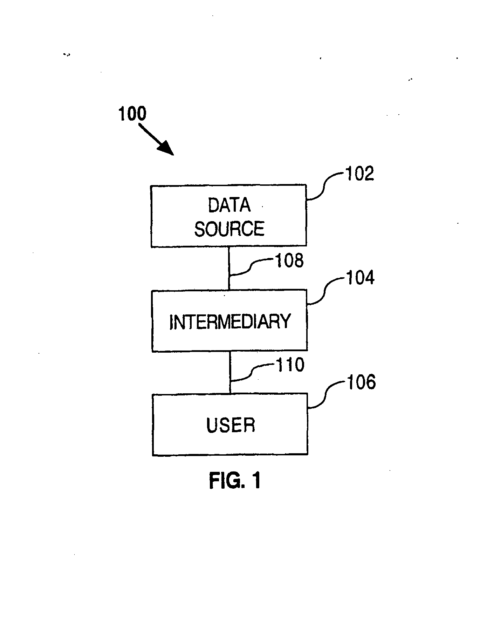

FIG. 1 is a block diagram of an arrangement 100 for tracking data according to an embodiment of the invention. Arrangement 100 includes a data source 102, an intermediary 104 and a user 106. Data source 102 and intermediary 104 are communicatively coupled by a communications link 108. Intermediary 104 and user 106 are communicatively coupled by a communications link 110. Communications links 108, 110 may be implemented by any medium or mechanism that provides for the exchange of data between data source 102 and intermediary 104, and intermediary 104 and user 106, respectively. Examples of communications links 108, 110 include, without limitation, a network such as a Local Area Network (LAN), Wide Area Network (WAN), Ethernet or the Internet, or one or more terrestrial, satellite or wireless links.

Data source 102 may be any source of data. For example, in the context of the Internet, data source 102 may be one or more origin servers that store content. Intermediary 104 may be any medium or mechanism through which data passes when data is supplied from data source 102 to user 106. Examples of intermediary 104 include, without limitation, a network cache and a traffic server. Intermediary 104 may be configured with local storage, for example, a database. In operation, user 106 requests data from data source 102. The data is supplied by data source 102 to user 106 through intermediary 104. According to one embodiment of the invention, intermediary 104 is configured to determine whether the data contains a watermark. If the data contains a watermark, then intermediary 104 creates a record that intermediary 104 supplied the data.

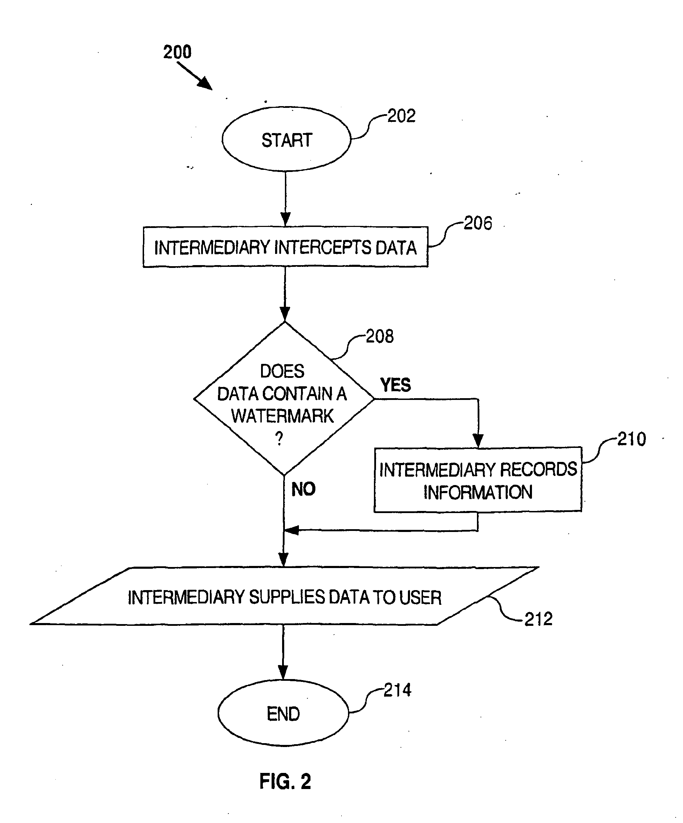

FIG. 2 is a flow diagram 200 that illustrates an approach for tracking data according to an embodiment of the invention. After starting in step 202, in step 206, intermediary 104 intercepts data from data source 102. In step 208, intermediary 104 determines whether the data contains a watermark. If the data contains a watermark, then in step 210, intermediary 104 records that the data containing a watermark is being supplied. In step 212, intermediary 104 supplies the data (with or without a watermark) to user 106. The process is complete in step 214.

It should be noted that for purposes of explanation, the recording of information in step 212 is described as occurring before intermediary 104 supplies the data containing a watermark to user 106 in step 212. Intermediary 104 may alternatively provide the data containing a watermark to user 106 before recording the information.

This approach allows data supplied by intermediaries to be tracked. More specifically, this approach allows owners of data to track the dissemination of data, by intermediaries, which is particularly useful for policing unauthorized copies of data, such as copyrighted works of authorship.

### 2. RECORD KEEPING AND REPORTING

Intermediary 104 is configured to record various types of information when intermediary 104 supplies data containing a watermark. The type of information recorded by intermediary 104 depends upon the requirements of a particular application and the type of tracking desired. For example, intermediary 104 may record only that intermediary 104 supplied data containing a watermark, without specifying the origin or destination of the data. Intermediary 104 may also record that intermediary 104 supplied data containing a watermark to a particular destination, e.g., to user 106. For example, intermediary 104 may record an identification of user 106. As another example, intermediary 104 may record data that identifies a location associated with user 106, such as an Internet Protocol (IP) address, a Uniform Resource Locator (URL), or other location information.

According to another embodiment of the invention, intermediary 104 is configured to record time and date information, e.g., a timestamp, that indicates when intermediary 104 supplied data. Intermediary 104 may also be configured to record information about the source of the data containing a watermark that intermediary 104 supplied to user 106. This may include, for example, data that identifies data source 102, or a location associated with data source 102, such as an IP address or URL of data source 102. According to another embodiment of the invention, intermediary 104 is configured to extract and record information from a watermark, such as ownership information. Intermediary 104 may also be configured to record information about itself 104. For example, intermediary 104 may record that data supplied to user 106 passed through intermediary 104.

Intermediary 104 may also generate reporting information about data supplied to other entities. For example, intermediary 104 may record information that indicates the source and destination of data passing through intermediary 104. Intermediary 104 may also record time and date information associated with data passing through intermediary 104. Intermediary 104 may also record one or more attributes of data passing through intermediary 104. Reporting data generated by intermediary 104 may be made available to data source 102 or other entities (not illustrated).

According to another embodiment of the invention, intermediary 104 is configured to determine whether data source 102 is associated with an owner of rights in data passing through intermediary 104. If data source 102 is not associated with the owner of rights in the data, then intermediary 104 is configured to generate and send a message to the owner of the rights in the data indicating that the data, in which the owner owns rights, was received from a source, i.e., data source 102, not associated with the owner. According to another embodiment of the invention, intermediary 104 is configured to refuse to provide the data to user 106 when data source 102 is not associated with the owner of rights in the data. In this capacity, intermediary 104 acts as a security gatekeeper for unauthorized copies of data.

### 3. WATERMARKING.

Many different types of watermarks may be used with the present approach for tracking data and the invention is not limited to any particular type of watermark or watermarking technique. For example, watermarks may be implemented by encoding a portion or an entire set of data. A watermark may be implemented in a manner so as to be detectable without the use of machine processing. For example, image data may be encoded with a watermark that is visible to the human eye when the image data is displayed. This technique is useful as a deterrent to illegal copying of data. Alternatively, a watermark may be invisible to the human eye and only detected by machine processing. For example, image or video data may be encoded in a manner such that a watermark is detectable by a computer, but invisible to the human eye. As another example, sound data may be encoded in a manner such that a watermark is audible or inaudible to the human ear.

The type of information associated with a watermark may vary from implementation to implementation. For example, a watermark may indicate the creator of data and/or the owner of rights to data. A watermark may include, for example, a copyright notice. Watermarks may also identify the legitimate owner of a copy of the data. Watermarks may also include a location of, for example, a physical address, an IP address or URL of an owner.

A single watermark may include numerous items of information. For example, a watermark in a particular copy of an image may identify company A as the legitimate owner of that copy, company B as the owner of the copyrights in the image, the duration and start date of a license agreement between companies A and B, the IP addresses of companies A and B, etc.

According to one embodiment of the invention, intermediary 104 updates watermarks according to an approach referred to herein as "dynamic watermarking." According to the dynamic watermarking approach, intermediary 104 receives data from data source 102 and determines whether the data contains a watermark. If the data contains a watermark, then intermediary 104 dynamically updates a watermark and supplies the data with the dynamically-updated watermark to user 106.

Dynamic watermarking may involve deleting existing information from a watermark, adding new information to a watermark, or both. For example, intermediary 104 may update a watermark to include additional information about the source of the data, such as the location of data source 102. As another example, intermediary 104 may update the watermark to include time and date information, e.g., a timestamp, that indicates the time and date that the data with the dynamically-updated watermark is supplied by intermediary 104 to user 106. Intermediary 104 may also update a watermark to include information about user 106 or a location associated with user 106. For example, intermediary 104 may dynamically update a watermark to specify an IP address or URL of user 106. Intermediary 104 may also update a watermark to include information about itself, such as an IP address or URL of intermediary 104.

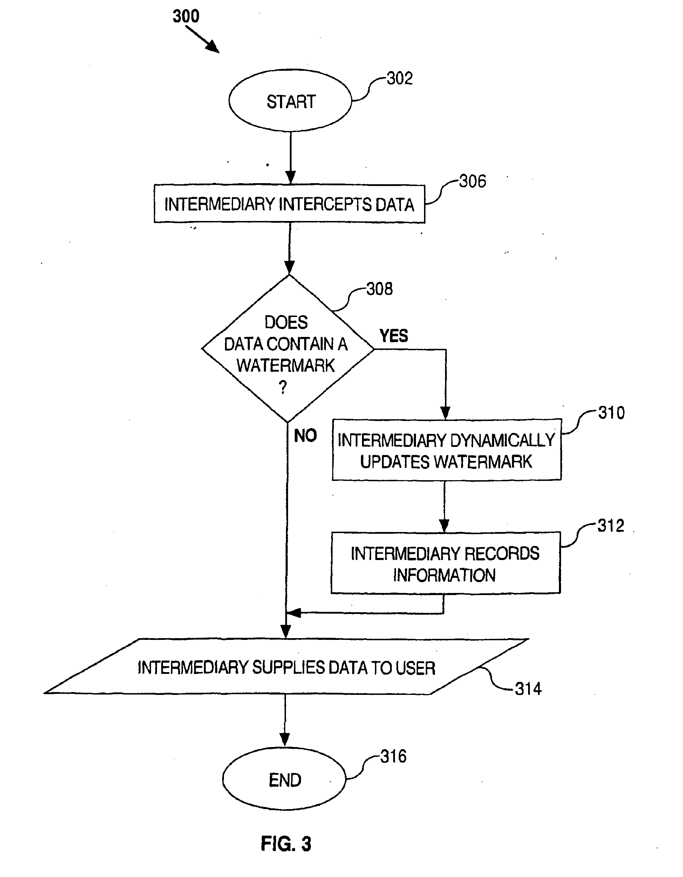

FIG. 3 is a flow diagram 300 that illustrates an approach for tracking data using dynamic watermarking according to an embodiment of the invention. After starting in step 302, in step 306, intermediary 104 intercepts data from data source 102. In step 308, intermediary 104 determines whether the data contains a watermark. If the data contains a watermark, then in step 310, intermediary 104 dynamically updates the watermark to add or remove information, as previously described. In step 312, intermediary 312 records that the data containing a watermark is being supplied, or other information, such as the origin or destination of the data. In step 314, intermediary 104 supplies the data (with or without a watermark) to user 106. The process is complete in step 316.

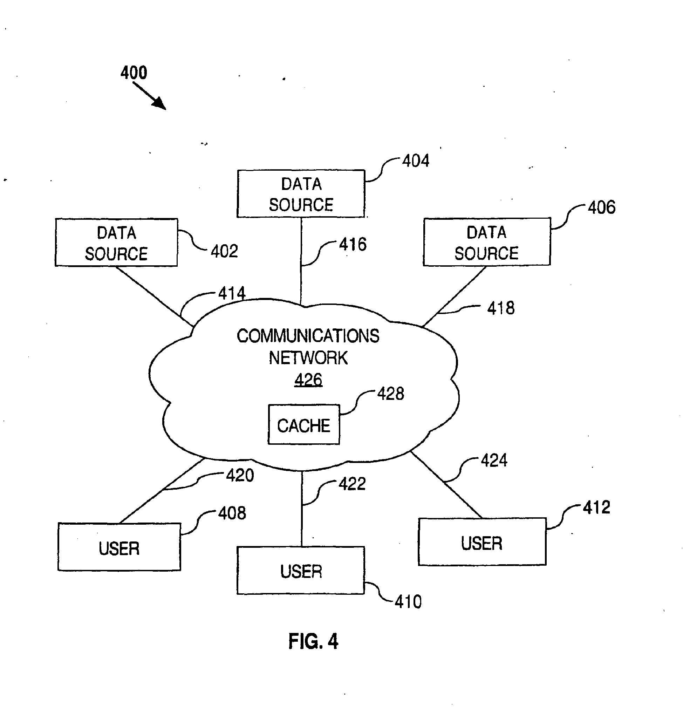

FIG. 4 is a block diagram of an arrangement 400 upon which an approach for tracking data may be implemented in accordance with an embodiment of the invention. Arrangement 400 includes data sources 402, 404, 406, users 408, 410, 412, communications links 414, 416, 418, 420, 422, 424 and a communications network 426. Communications links 414, 416, 418, 420, 422, 424 may be implemented by any medium or mechanism that provides for the exchange of data between their respective endpoints. Examples of communications links 414, 416, 418, 420, 422, 424 include, without limitation, networks such as Local Area Networks (LANs), Wide Area Networks (WANs), Ethernets or the Internet, or one or more terrestrial, satellite or wireless links. Communications network 426 may be any type of communications network, for example a Local Area Network (LAN), a Wide Area Network (WAN), or a packet-based network such as an Ethernet or the Internet.

Users 408, 410, 412 request data from data sources 402, 404, 406. The data is provided to users 408, 410, 412 over communications links 414, 416, 418, 420, 422, 424 and communications network 426. Data being provided to users 408, 410, 412 is passed through and stored on an intermediary, which in the present example is a cache 428. For example, suppose user 408 requests a data item from data source 406. The data item is supplied by data source 406 over communications link 418 and communications network 426 and stored in cache 428. The data item is then supplied by cache 428 to user 408. Intermediaries such as cache 428 may be used to store frequently-requested versions of data to reduce the amount of time required to supply the frequently-requested versions of data to users 408, 410, 412.

According to one embodiment of the invention, cache 428 is configured to determine whether data being supplied by cache 428 includes a watermark. If the data being supplied by cache 428 includes a watermark, then cache 428 records information about the data being supplied. As previously described, cache 428 may record a variety of different types of information. For example, cache 428 may record only that data containing a watermark has been supplied by cache 428. Cache 428 may also record that data containing a watermark has been supplied by cache 428 to a particular user, which in the present example, is user 408. This may include, for example, an identity of user 408 or a location associated with user 408, such as an IP address or URL of user 408. Cache 428 may also record information about the source of the data that includes the watermark and that is being supplied by cache 428. For example, cache 428 may record an identity of data source 406. As another example, cache 428 may record a location associated with data source 406, such as an IP address or URL of data source 406.

Cache 428 may be further configured to record time and date information, e.g., a timestamp, that indicates the time at which the data containing the watermark was supplied by cache 428 to user 408. Cache 428 may also extract and record information contained in the watermark of the data being supplied to user 408. For example, suppose that a particular watermark identifies an owner of the data or copyright information. Cache 428 may also record the owner of the data or the copyright information. Cache 428 may also be configured to generate statistical information about data containing watermarks that is supplied by cache 428. Cache 428 may be further configured to report statistical information to various entities, for example to data sources 402, 404, 406, or the owners of supplied data.

In the context of a communications network, such as the Internet, cache 428 is typically implemented as storage, such as one or more databases, with one or more software processes that manage storing and retrieving data from the storage. In this context, the inspection of data supplied by cache 428 may be performed by a software process executing at cache 428, e.g., integrated functionality, or may be implemented as a disparate process that interacts with cache 428. The invention is not limited to any particular implementation of cache 428. Furthermore, in the present example, cache 428 is illustrated in FIG. 4 as being contained in communications network 426, but the invention is not limited to this context and is also applicable to applications where cache 428 resides outside of communications network 426.

In the present example, configuring cache 428 in the manner described allows data containing watermarks to be tracked. This is particularly useful for tracking the dissemination, e.g., the downloading, of unauthorized copies of data. Cache 428 may also be configured to generate reporting data for data supplied by cache 428. For example, cache 428 may be configured to generate reporting data that specifies the source and destination of data provided from data sources 402, 404, 406 to users 408, 410, 412 to allow data to be tracked.

### 4. IMPLEMENTATION MECHANISMS

The approach for tracking data may be implemented in a wide variety of applications and contexts. For example, any type of intermediary, such as a network cache, may be configured to track data in accordance with the approach described herein. The approach may also be implemented as a stand-alone mechanism that interacts with a intermediary. The approach may be implemented in hardware circuitry, in computer software, or a combination of hardware circuitry and computer software and the invention is not limited to a particular hardware or software implementation. For example, the approach may be implemented as a process executing in conjunction with a network cache manager.

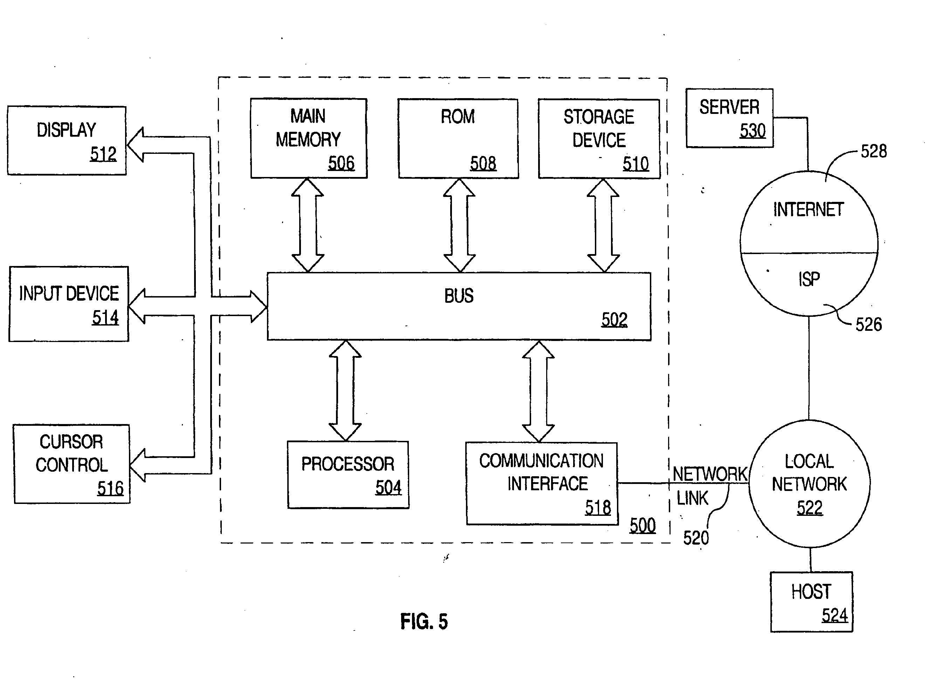

Figure 5 is a block diagram that illustrates a computer system 500 upon which an embodiment of the invention may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

The invention is related to the use of computer system 500 for tracking data. According to one embodiment of the invention, the tracking of data is provided by computer system 500 in response to processor 504 executing one or more sequences of one or more instructions contained in main memory 506. Such instructions may be read into main memory 506 from another computer-readable medium, such as storage device 510. Execution of the sequences of instructions contained in main memory 506 causes processor 504 to perform the process steps described herein. One or more processors in a multi-processing arrangement may also be employed to execute the sequences of instructions contained in main memory 506. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 504 for execution. Such a medium may take many forms, including but not limited to, non-volatile media, volatile media, and transmission media. Non-volatile media includes, for example, optical or magnetic disks, such as storage device 510. Volatile media includes dynamic memory, such as main memory 506. Transmission media includes coaxial cables, copper wire and fiber optics, including the wires that comprise bus 502. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infrared transmitter to convert the data to an infrared signal. An infrared detector coupled to bus 502 can receive the data carried in the infrared signal and place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the worldwide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. In accordance with the invention, one such downloaded application provides for the tracking of data as described herein.

The received code may be executed by processor 504 as it is received, and/or stored in storage device 510, or other non-volatile storage for later execution. In this manner, computer system 500 may obtain application code in the form of a carrier wave.

The novel approach described herein for tracking data provides several advantages over prior approaches. First, the approach provides for the tracking of data in a manner that does not require repeated "crawling" of a communications network. More particularly, the approach provides for the tracking of the usage of data, for example, source, destination, frequency and timestamping, which is particularly useful for tracking the pirating of data. The approach may also be implemented transparent to users 408, 410, 412, making it a "low friction", i.e., a less intrusive or disruptive, approach.

In the foregoing specification, the invention has been described with reference to specific embodiments thereof. However, various modifications and changes may be made thereto without departing from the broader spirit and scope of the invention. The specification and drawings are, accordingly, to be regarded in an illustrative sense rather than a restrictive sense.

## Claims

1. A method of operating an intermediary computer to track data requested by a user from a source server over a network, wherein the source server is arranged to communicate with the intermediary computer via a first network communications link, and the intermediary computer is arranged to communicate with the user via a second network communications link, the method comprising the computer-implemented steps of:
receiving (206), at the intermediary computer (104), the requested data from the source server (102); and
supplying (212), via the second network communications link, the requested data from the intermediary computer to the user (106);
**characterised in that** the method comprises the intermediary computer performing the steps of:
determining (208) whether the requested data includes rights data that indicates an owner of rights to the requested data; and
if the requested data includes the rights data:
(a) determining whether the source server is associated with the owner of rights to the requested data; and
(b) if the source server is not associated with the owner of rights to the requested data, then the intermediary computer not allowing the requested data to be supplied to the user; and
(c) if the source server is associated with the owner of rights to the requested data, then the intermediary computer supplying the requested data to the user and recording (210) that the requested data was supplied.

2. The method as recited in claim 1, further comprising recording the source server from which the intermediary computer receives the requested data.

3. The method as recited in claim 1, further comprising recording the user to which the requested data was supplied.

4. The method as recited in claim 3, further comprising recording that the requested data was supplied to a location associated with the user.

5. The method as recited in claim 1, further comprising recording a time at which the requested data was supplied.

6. The method as recited in claim 5, wherein the step of recording a time at which the requested data was supplied includes updating the rights data to indicate a time at which the requested data was supplied.

7. The method as recited in claim 5, further comprising informing the source server that the requested data was supplied at the time.

8. The method as recited in claim 1, further comprising dynamically updating the rights data to indicate the user to which the requested data was supplied.

9. The method as recited in claim 1, further comprising dynamically updating the rights data to indicate that the intermediary computer supplied the requested data.

10. The method as recited in claim 1, wherein the rights data is a watermark.

11. The method as recited in claim 1, wherein the requested data is music data.

12. The method as recited in claim 1, wherein the requested data is image data.

13. The method as recited in claim 1, wherein the requested data is video data.

14. The method as recited in claim 1, wherein the requested data is digital data.

15. The method as recited in claim 1, wherein the intermediary computer is a cache.

16. The method as recited in claim 1, wherein the method further comprises:
following determining whether the source server is associated with the owner of rights to the requested data, and if the source server is not associated with the owner of rights to the requested data, then generating and transmitting to the owner of rights to the requested data, report data that indicates that the requested data was received from the source server not associated with the owner of rights to the requested data.

17. A computer system for tracking data comprising:
one or more processors (504); and
a memory (506,508) communicatively coupled to the one or more processors and containing one or more sequences of one or more instructions which, when executed by the one or more processors, cause the one or more processors to perform the method according to any one of claims 1 to 16.

18. A computer system as claimed in claim 17, comprising
an input/output mechanism configured to receive data from a source server and supply the data to a user; and
a data tracking mechanism communicatively coupled to the input/output mechanism and configured to determine whether the data includes rights data that indicates ownership rights in the data, and if the data includes the rights data, then record that the data was supplied.

19. A computer system as claimed in claim 17, wherein the memory comprises a computer-readable medium.

20. A computer-readable medium carrying one or more sequences of one or more instructions for tracking data, the one or more sequences of one or more instructions including instructions which, when executed by one or more processors, cause the one or more processors to perform the method according to any one of claims 1 to 16.

## Patentansprüche

1. Verfahren zum Betreiben eines Zwischencomputers zum Verfolgen von Daten, die ein Nutzer von einem Quellserver über ein Netzwerk anfordert, wobei der Quellserver dazu ausgestaltet ist, mit dem Zwischencomputer über eine erste Netzkommunikationsverbindung zu kommunizieren, und wobei der Zwischencomputer dazu ausgestaltet ist, mit dem Nutzer über eine zweite Netzkommunikationsverbindung zu kommunizieren, wobei das Verfahren die folgenden computerimplementierten Schritte aufweist:
Empfang (206), am Zwischencomputer (104), der angeforderten Daten von dem Quellserver (102); und
Leiten (212), über die zweite Netzkommunikationsverbindung, der angeforderten Daten von dem Zwischencomputer an den Nutzer (106);
**dadurch gekennzeichnet, dass** das Verfahren aufweist, dass der Zwischencomputer die folgenden Schritte durchführt:
Bestimmen (208), ob die angeforderten Daten Rechtedaten aufweisen, die einen Inhaber von Rechten für die angeforderten Daten angeben; und
wenn die angeforderten Daten die Rechtedaten aufweisen:
(a) Bestimmen, ob der Quellserver mit dem Inhaber von Rechten für die angeforderten Daten in Verbindung steht; und
(b) wenn der Quellserver nicht mit dem Inhaber von Rechten für die angeforderten Daten in Verbindung steht, dann nicht Erlauben durch den Zwischencomputer, dass die angeforderten Daten an den Nutzer geleitet werden; und
(c) wenn der Quellserver mit dem Inhaber von Rechten für die angeforderten Daten in Verbindung steht, dann Leiten durch den Zwischencomputer der angeforderten Daten an den Nutzer und Erfassen (210), dass die angeforderten Daten weitergeleitet wurden.

2. Verfahren nach Anspruch 1, das ferner ein Erfassen des Quellservers aufweist, von welchem der Zwischencomputer die angeforderten Daten empfängt.

3. Verfahren nach Anspruch 1, das ferner ein Erfassen des Nutzers aufweist, an welchen die angeforderten Daten geleitet wurden.

4. Verfahren nach Anspruch 3, das ferner ein Erfassen aufweist, dass die angeforderten Daten an einen dem Nutzer zugehörigen Ort geleitet wurden.

5. Verfahren nach Anspruch 1, das ferner ein Erfassen einer Zeit aufweist, zu welcher die angeforderten Daten weitergeleitet wurden.

6. Verfahren nach Anspruch 5, wobei der Schritt des Erfassens einer Zeit, zu welcher die angeforderten Daten weitergeleitet wurden, ein Aktualisieren der Rechtedaten aufweist, um eine Zeit anzugeben, zu welcher die angeforderten Daten weitergeleitet wurden.

7. Verfahren nach Anspruch 5, das ferner ein Informieren des Quellservers aufweist, dass die angeforderten Daten zu der Zeit weitergeleitet wurden.

8. Verfahren nach Anspruch 1, das ferner ein dynamisches Aktualisieren der Rechtedaten aufweist, um den Nutzer anzugeben, an welchen die angeforderten Daten geleitet wurden.

9. Verfahren nach Anspruch 1, das ferner ein dynamisches Aktualisieren der Rechtedaten aufweist, um anzugeben, dass der Zwischencomputer die angeforderten Daten weitergeleitet hat.

10. Verfahren nach Anspruch 1, wobei die Rechtedaten ein Wasserzeichen sind.

11. Verfahren nach Anspruch 1, wobei die angeforderten Daten Musikdaten sind.

12. Verfahren nach Anspruch 1, wobei die angeforderten Daten Bilddaten sind.

13. Verfahren nach Anspruch 1, wobei die angeforderten Daten Videodaten sind.

14. Verfahren nach Anspruch 1, wobei die angeforderten Daten digitale Daten sind.

15. Verfahren nach Anspruch 1, wobei der Zwischencomputer ein Cache-Speicher ist.

16. Verfahren nach Anspruch 1, wobei das Verfahren ferner Folgendes aufweist:
nach dem Bestimmen, ob der Quellserver mit dem Inhaber von Rechten für die angeforderten Daten in Verbindung steht, und ob der Quellserver nicht mit dem Inhaber von Rechten für die angeforderten Daten in Verbindung steht, anschließendes Erzeugen und Übertragen an den Inhaber von Rechten für die angeforderten Daten von Berichtsdaten, die angeben, dass die angeforderten Daten von dem Quellserver empfangen wurden, der nicht mit dem Inhaber von Rechten für die angeforderten Daten in Verbindung steht.

17. Computersystem zum Verfolgen von Daten, das Folgendes aufweist:
einen oder mehrere Prozessoren (504); und
einen Speicher (506, 508), der kommunikativ mit dem einen oder den mehreren Prozessoren verbunden ist und eine oder mehrere Sequenzen eines oder mehrerer Befehle enthält, die, wenn sie von dem einen oder den mehreren Prozessoren ausgeführt werden, veranlassen, dass der eine oder die mehreren Prozessoren das Verfahren gemäß einem der Ansprüche 1 bis 16 ausführt.

18. Computersystem nach Anspruch 17, das Folgendes aufweist:
einen Eingabe-/Ausgabemechanismus, der dazu ausgestaltet ist, Daten von einem Quellserver zu empfangen und die Daten an einen Nutzer zu leiten; und
einen Datenverfolgungsmechanismus, der kommunikativ mit dem Eingabe-/Ausgabemechanismus verbunden ist und dazu ausgestaltet ist, zu bestimmen, ob die Daten Rechtedaten aufweisen, die Inhaberrechte an den Daten angeben, und wenn die Daten die Rechtedaten aufweisen, anschließendes Erfassen, dass die Daten weitergeleitet wurden.

19. Computersystem nach Anspruch 17, wobei der Speicher ein computerlesbares Medium aufweist.

20. Computerlesbares Medium, das eine oder mehrere Sequenzen eines oder mehrerer Befehle zum Verfolgen von Daten trägt, wobei die eine oder die mehreren Sequenzen eines oder mehrerer Befehle Befehle aufweisen, die, wenn sie von einem oder mehreren Prozessoren ausgeführt werden, veranlassen, dass der eine oder die mehreren Prozessoren das Verfahren gemäß einem der Ansprüche 1 bis 16 ausführen.

## Revendications

1. Procédé de fonctionnement d'un ordinateur intermédiaire pour suivre des données requises par un utilisateur d'un serveur source sur un réseau, où le serveur source est agencé pour communiquer avec l'ordinateur intermédiaire par une première liaison de communications réseau, et l'ordinateur intermédiaire est agencé pour communiquer avec l'utilisateur par une deuxième liaison de communications réseau, le procédé comprenant les étapes mises en oeuvre par ordinateur de :
recevoir (206), à l'ordinateur intermédiaire (104), les données requises du serveur source (102) ; et
fournir (212), par la deuxième liaison de communications réseau, les données requises de l'ordinateur intermédiaire à l'utilisateur (106) ;
**caractérisé en ce que** le procédé comprend l'exécution, par l'ordinateur intermédiaire, des étapes de :
déterminer (208) si les données requises incluent des données relatives aux droits qui indiquent un détenteur de droits des données requises ; et
si les données requises incluent des données relatives aux droits :
(a) déterminer si le serveur source est associé au détenteur de droits des données requises ; et
(b) si le serveur source n'est pas associé au détenteur de droits des données requises, l'ordinateur intermédiaire n'autorisera pas la fourniture des données requises à l'utilisateur ; et
(c) si le serveur source est associé au détenteur de droits des données requises, l'ordinateur intermédiaire fournira les données requises à l'utilisateur et enregistre (210) que les données requises ont été fournies.

2. Procédé selon la revendication 1, comprenant en outre l'enregistrement du serveur source duquel l'ordinateur intermédiaire reçoit les données requises.

3. Procédé selon la revendication 1, comprenant en outre l'enregistrement de l'utilisateur auquel les données requises ont été fournies.

4. Procédé selon la revendication 3, comprenant en outre l'enregistrement que les données requises ont été fournies à une localisation associée à l'utilisateur.

5. Procédé selon la revendication 1, comprenant en outre l'enregistrement d'un temps auquel les données requises ont été fournies.

6. Procédé selon la revendication 5, dans lequel l'étape d'enregistrement d'un temps auquel les données requises ont été fournies comprend la mise à jour des données relatives aux droits pour indiquer un temps auquel les données requises ont été fournies.

7. Procédé selon la revendication 5, comprenant en outre l'information du serveur source que les données requises ont été fournies au temps.

8. Procédé selon la revendication 1, comprenant en outre la mise à jour dynamique des données relatives aux droits pour indiquer l'utilisateur auquel les données requises ont été fournies.

9. Procédé selon la revendication 1, comprenant en outre la mise à jour dynamique des données relatives aux droits pour indiquer que l'ordinateur intermédiaire a fourni les données requises.

10. Procédé selon la revendication 1, dans lequel les données relatives aux droits est un filigrane.

11. Procédé selon la revendication 1, dans lequel les données requises sont des données musicales.

12. Procédé selon la revendication 1, dans lequel les données requises sont des données d'image.

13. Procédé selon la revendication 1, dans lequel les données requises sont des données vidéo.

14. Procédé selon la revendication 1, dans lequel les données requises sont des données numériques.

15. Procédé selon la revendication 1, dans lequel l'ordinateur intermédiaire est un cache.

16. Procédé selon la revendication 1, où le procédé comprend en outre :
à la suite de la détermination si le serveur source est associé au détenteur de droits des données requises, et si le serveur source n'est pas associé au détenteur de droits des données requises, alors produire et transmettre au détenteur de droits des données requises, des données de rapport qui indiquent que les données reçues ont été reçues du serveur source non associé au détenteur de droits des données requises.

17. Système d'ordinateur pour le suivi de données comprenant :
un ou plusieurs processeurs (504) ; et
une mémoire (506, 508) couplée de manière communicative auxdits un ou plusieurs processeurs et contenant une ou plusieurs séquences d'une ou de plusieurs instructions qui, lorsqu'elles sont exécutées par lesdits un ou plusieurs processeurs, amènent lesdits un ou plusieurs processeurs à exécuter le procédé selon l'une quelconque des revendications 1 à 16.

18. Système d'ordinateur selon la revendication 17, comprenant
un mécanisme d'entrée/sortie configuré pour recevoir des données d'un serveur source et pour fournir les données à un utilisateur ; et
un mécanisme de suivi des données couplé de manière communicative au mécanisme d'entrée/sortie et configuré pour déterminer si les données incluent des données relatives aux droits qui indiquent des droits de propriété dans les données, et si les données incluent les données relatives aux droits, enregistrer que les données ont été fournies.

19. Système d'ordinateur selon la revendication 17, dans lequel la mémoire comprend un support lisible par ordinateur.

20. Support lisible par ordinateur supportant une ou plusieurs séquences d'une ou de plusieurs instructions pour le suivi des données, une ou plusieurs séquences précitées d'une ou de plusieurs instructions incluant des instructions qui, lorsqu'elles sont exécutées par un ou plusieurs processeurs, amènent un ou plusieurs processeurs précités à exécuter le procédé selon l'une quelconque des revendications 1 à 16.
